# EUROPEAN PATENT APPLICATION

(11) **EP 4 372 886 A1**
(43) Date of publication of application: **22.05.2024**
(21) Application number: 22935555.7
(22) Date of filing: 31.03.2022
(51) Int. Cl.: H01M 50/262

(54) **BATTERY PACK AND METHOD FOR MANUFACTURING SAME**

(71) Applicant: Vehicle Energy Japan Inc., Ibaraki 312-8505 (JP)
(72) Inventor: NAITO, Masashi, Hitachinaka-shi, Ibaraki 312-8505 (JP); NAKAJIMA, Takayuki, Hitachinaka-shi, Ibaraki 312-8505 (JP); NAKAMOTO, Masayuki, Hitachinaka-shi, Ibaraki 312-8505 (JP)
(74) Representative: Manitz Finsterwald Patent- und Rechtsanwaltspartnerschaft mbB
(86) International application number: PCT/JP2022/016974
(87) International publication number: WO 2023/188418

(57) **Abstract**

An assembled battery with a plurality of stacked batteries tightly tied with holding members and mounted on a mounting object, wherein regarding each of the plurality of batteries, at least a battery bottom face is covered with an insulation member; the battery bottom face is placed opposite the mounting object's side; and wherein the holding members have end members placed at both ends of the batteries in a stacking direction, and side members connected to the end members to surround, together with the end members, the plurality of batteries; wherein each of the end members has, on the mounting object's side, a first area which constitutes a main part, and a second area which is formed at first legs and protrudes towards the mounting object's side beyond the first area and the battery bottom face. The end member has a second area located on both sides of the first area. A spacer located between the plurality of stacked batteries has, on the mounting object's side, a third area and a fourth area which protrudes towards the mounting object's side beyond the third area and the battery bottom face and is formed at second legs.

## Description

### TECHNICAL FIELD

The present invention relates to an assembled battery including a plurality of battery cells and a method for manufacturing the assembled battery.

### BACKGROUND ART

Conventionally, there has been known an assembled battery including a plurality of battery cells and a securing member for tightly tying a battery-stacked body composed by stacking these battery cells (PTL 1). With the above-described assembled battery, an exterior can for the battery cells is made of metals and the exterior can may sometimes be covered with an insulation film in order to prevent a short circuit caused by condensation, etc. Generally, regarding the assembled battery including the plurality of battery cells, the insulation film which covers bottom faces of the battery cells is susceptible to damage during a manufacturing step.

As a countermeasure against it, the conventional assembled battery adopts a structure designed so that lower ends of a plurality of plates which support the plurality of battery cells from both their sides in a stacking direction are made to protrude downwards beyond the bottom faces of the battery cells. As a result of this structure which avoids any contact between a worktable and the bottom faces of the battery cells in the manufacturing step, it becomes possible to prevent any damage to the insulation film which covers the bottom faces of the battery cells.

### CITATION LIST

### PATENT LITERATURE

PTL 1: WO2020/066060

### SUMMARY OF THE INVENTION

### PROBLEMS TO BE SOLVED BY THE INVENTION

However, with the assembled battery of the above-described structure, the plurality of plates which support the battery cells from both their sides in the stacking direction are interposed between a cooling plate and the battery cells, so that there is still room for improvement of cooling performance of the battery cells.

The present invention was devised in light of the above-described circumstances and provides an assembled battery capable of preventing film tear in the manufacturing step and also enhancing cooling efficiency.

### MEANS TO SOLVE THE PROBLEMS

The present invention for solving to the problems is an assembled battery with a plurality of stacked batteries tightly tied with holding members and mounted on a mounting object, wherein regarding each of the plurality of batteries, a power storage element is placed in a battery container having a bottom face; at least the bottom face is covered with an insulation member; the bottom face is placed opposite the mounting object's side; and the holding members have end members placed at both ends of the batteries in a stacking direction; and wherein each of the end members has, on the mounting object's side, a first area and a second area formed to protrude towards the mounting object's side beyond the first area and the bottom face.

### ADVANTAGEOUS EFFECTS OF THE INVENTION

According to the present invention, it is possible to provide the assembled battery assembled battery capable of preventing film tear in the manufacturing step and also enhancing cooling efficiency.

### BRIEF DESCRIPTION OF DRAWINGS

Fig. 1 is a perspective view illustrating the outline of an assembled battery according to an embodiment of the present invention;
Fig. 2 is a bottom view of a battery module which constitutes the assembled battery illustrated in Fig. 1;
Fig. 3 is a perspective view of a battery cell (a "battery" in the present invention) which constitutes the battery module whose bottom face is illustrated in Fig. 2;
Fig. 4 is a perspective view schematically illustrating an assembled battery according to another embodiment of the present invention;
Fig. 5A is a bottom view of a battery module which constitutes the assembled battery illustrated in Fig. 4;
Fig. 5B illustrates a front view part of an end member as viewed from a stacking direction and a right-side view part of the end member 30 as viewed from a width direction;
Fig. 6 is a perspective view illustrating the outline of an assembled battery according to a further another embodiment; and
Fig. 7 is a perspective view illustrating an assembled battery manufacturing method according to another embodiment.

### DESCRIPTION OF EMBODIMENTS

An explanation will be provided below about embodiments of an assembled battery according to the present invention. The assembled battery is mounted, for example, in a vehicle such as an electric automobile (EV) or a hybrid automobile (HEV). Incidentally, the same reference numerals are assigned to parts having the same effects in each drawing in order to avoid redundant explanations.

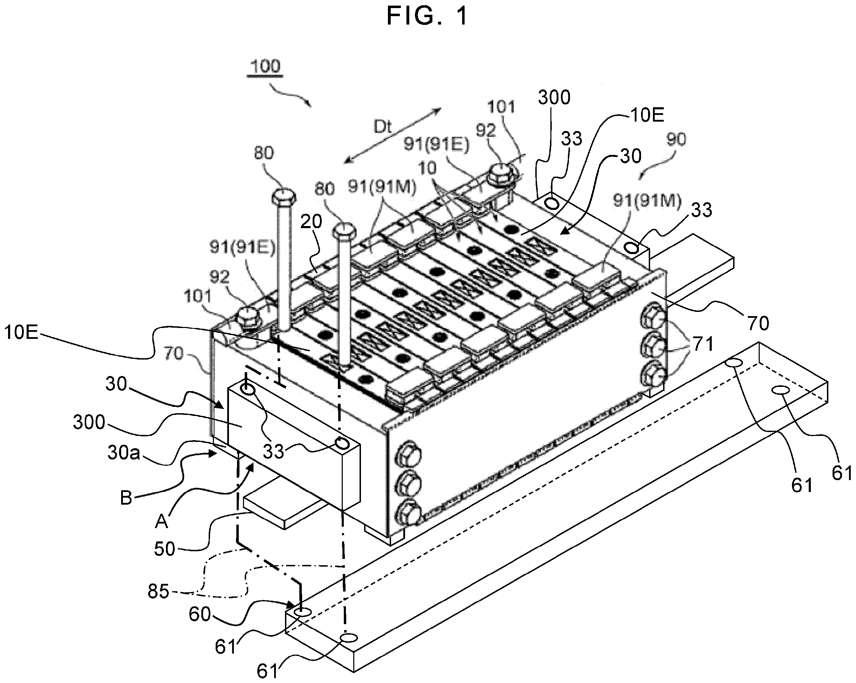

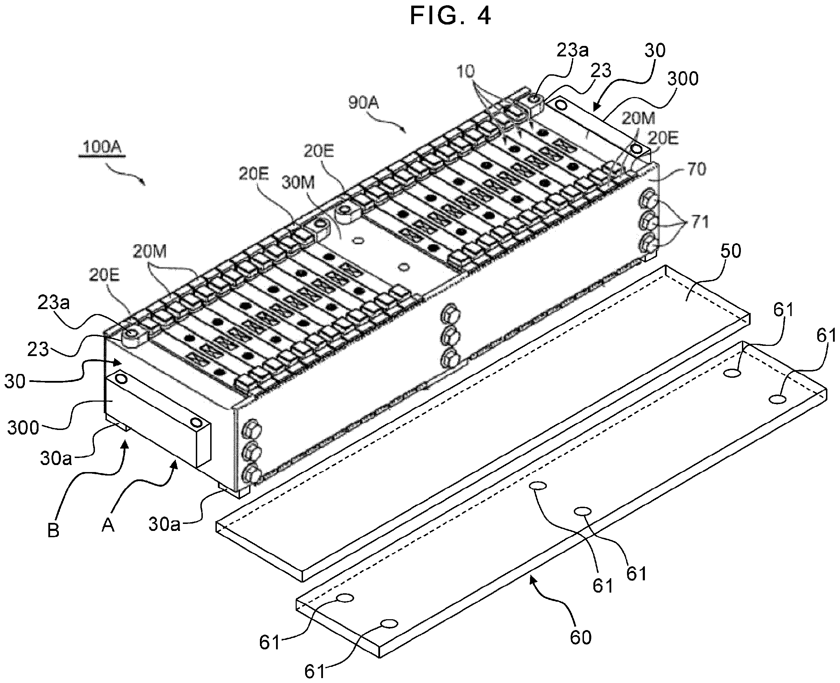

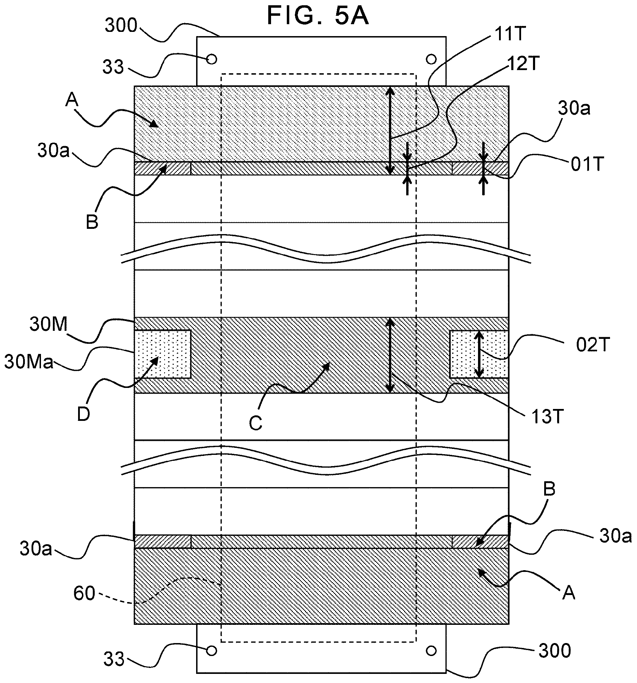

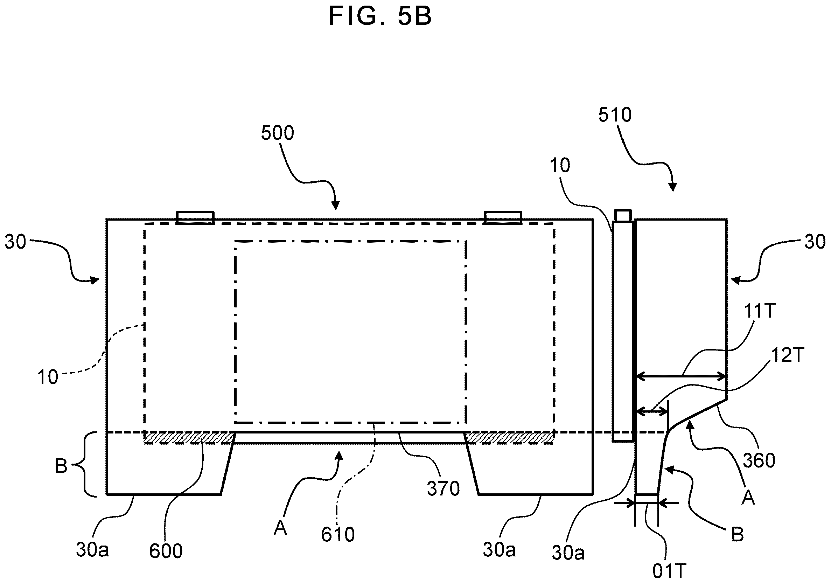

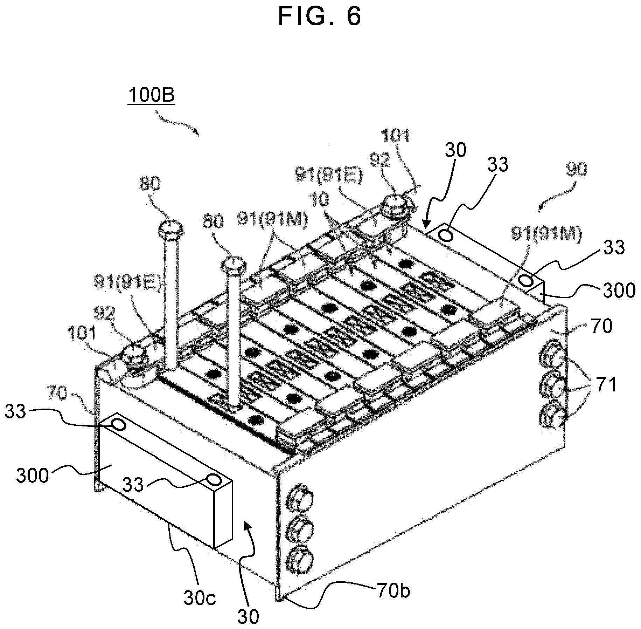

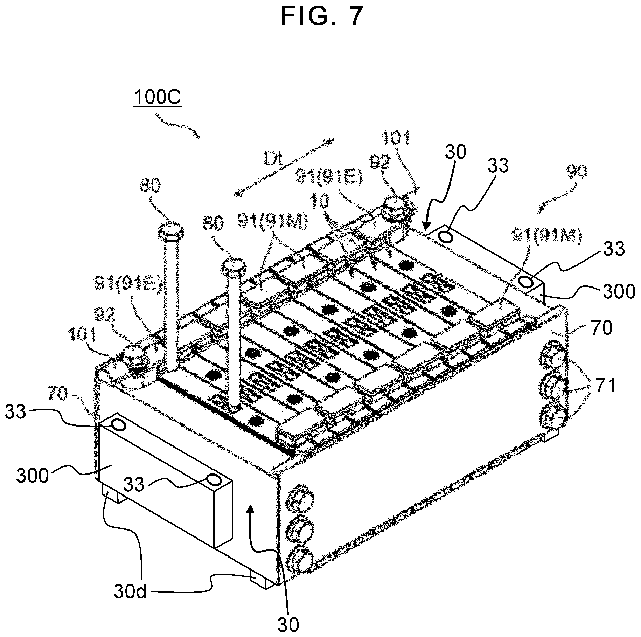

An assembled battery 100 according to an embodiment is illustrated in Fig. 1 to Fig. 3 (with reference to Fig. 4 to Fig. 7 as appropriate). Another embodiment 100A of the assembled battery is illustrated in Fig. 4 and Fig. 5, a further another embodiment 100B of the assembled battery is illustrated in Fig. 6, and a further another embodiment 100C of the assembled battery is illustrated in Fig. 7. Incidentally, when it is unnecessary to distinguish between the assembled batteries 100, 100A to 100C, they will be collectively referred to as the assembled battery 100.

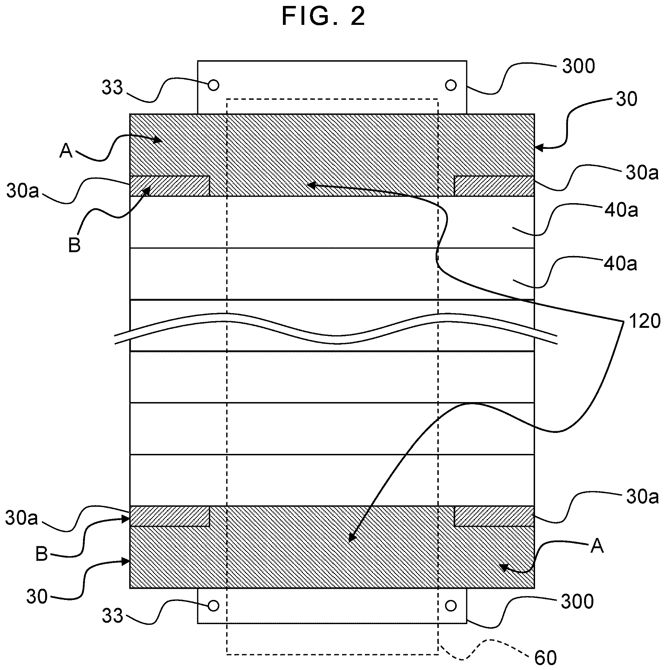

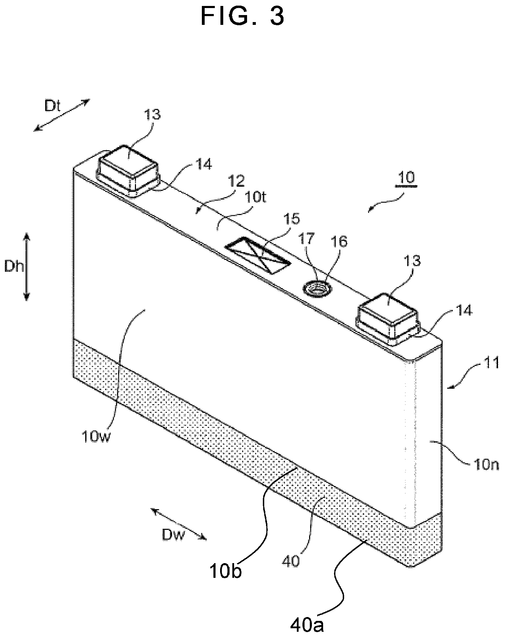

Fig. 1 is a perspective view of the assembled battery 100. Fig. 2 is a bottom view of a battery module 90 which constitutes the assembled battery 100 illustrated in Fig. 1. Fig. 3 is a perspective view of a battery cell 10 which constitutes the battery module 90 whose bottom face is illustrated in the Fig. 2. Referring to Fig. 3, the battery cell 10 has, for example, a battery can 11, a battery lid 12, and a pair of external terminals 13.

Incidentally, a power storage element which constitutes the battery cell 10 means the essence capable of storing electricity by including at least a pair of positive and negative electrodes, and an electrochemical reactant (electrolytic substance) interposed between both the electrodes. More specific examples of the power storage element may be listed such as a secondary battery represented by, for example, a lithium-ion battery, and an electrolytic capacitor capable of storing a large capacity of electricity. Incidentally, one-unit structure in which the power storage element is placed will be referred to as a battery cell 10 or simply as a battery 10.

In this example, a lithium-ion battery will be taken as an example of the battery cell 10. The battery can 11 is a container of a bottomed square tubular shape having an opening at one end of a height direction. The battery lid 12 is a generally rectangular plate shape member which closes and blocks the opening of the battery can 11. The battery can 11 and the battery lid 12 are formed from metal materials. Examples of such metal materials are listed such as aluminum or aluminum alloys.

Although it is not illustrated in the drawings, the power storage element is placed in a state of being covered with an insulation sheet inside the battery can 11. The power storage element is formed by, for example, putting and winding a strip-shaped positive electrode and a strip-shaped negative electrode together with a strip-shaped separator interposed between them. The battery can 11 in which the power storage element is placed is hermetically sealed by applying laser welding to the battery lid 12 along the entire periphery of the opening provided at its upper end.

The battery lid 12 has through holes for inserting a pair of external terminals 13 at its both ends in a longitudinal direction and has a gas exhaust valve 15 and a liquid injection hole 16 at an intermediate part of the longitudinal direction. The external terminal 13 has a generally rectangular parallelepiped, rectangular block shape and is located on an outside surface of the battery lid 12, that is, on a top face 10t of the battery cell 10 via a gasket 14 having electric insulation.

Although it is not illustrated in the drawings, the external terminal 13 has a connecting part of a columnar shape or cylindrical shape which extends from the bottom face opposite the battery lid 12 towards a direction to pierce through the battery lid 12. Of a pair of external terminals 13, one external terminal 13 is a positive-electrode external terminal 13 connected to the positive electrode of the power storage element via a positive-electrode current collecting plate within the battery can 11 and the other external terminal 13 is a negative-electrode external terminal 13 connected to the negative electrode of the power storage element via a negative-electrode current collecting plate within the battery can 11.

The gas exhaust valve 15 is, for example, a portion obtained by applying press work to part of the battery lid 12 to make it thin and forming a slit in it. The gas exhaust valve 15 which is cleaved when the internal pressure of the battery cell 10 rises to a specified pressure, so that the gas exhaust valve 15 discharges gas from inside the battery cell 10 and thereby reduces the internal pressure of the battery cell 10 and secures safety.

The liquid injection hole 16 is provided to inject an electrolytic solution into the battery can 11 and is sealed, after the injection of the electrolytic solution, by bonding a liquid injection plug 17 by means of, for example, laser welding. As the electrolytic solution to be injected into the battery can 11, for example, a nonaqueous electrolyte which is obtained by causing a lithium salt such as lithium hexafluorophosphate (LiPF6) to be dissolved in an organic solvent of a carbonate ester type such as ethylene carbonate can be used.

The assembled battery 100 stores the electric power, which has been supplied via a pair of input/output terminals 91, in the battery cells 10. The electric power stored in the battery cells 10 is supplied via the input/output terminals 91 to electric equipment such as a motor for a vehicle. The assembled battery 100 includes a plurality of flat battery cells 10, a plurality of cell holders 20, a plurality of plates (which will be also referred to as "end members " or "end blocks") 30 (Fig. 1, Fig. 2, Fig. 4 to Fig. 7), an insulation layer 40 (Fig. 3), a thermal conductive sheet 50 (Fig. 1 and Fig. 4), and a cooling unit 60 (Fig. 1 and Fig. 4).

Fig. 4 is a perspective view schematically illustrating the assembled battery 100A. The cell holder(s) 20 will be explained. As illustrated in Fig. 4, the same number of cell holders 20 as that of the battery cells 10 are prepared and stacked in order to support the battery cells 10. These cell holders 20 include end cell holders 20E and intermediate cell holders 20M, which will be collectively referred to as the cell holders 20.

The end cell holders 20E are placed at both ends of the stack. The intermediate cell holders 20M are placed in the middle of the stack. The plurality of cell holders 20 having different shapes for different positions as described above hold the individual battery cells 10 from both their sides in the thickness direction Dt and make them stacked in the thickness direction Dt.

The plurality of plates 30 support the plurality of battery cells 10 from both their sides in the stacking direction (the thickness direction Dt) via the cell holders 20E. The insulation layer 40 is provided at all the bottom faces 10b of the individual battery cells 10 (Fig. 3).

The thermal conductive sheet 50 is in contact with lower surfaces 40a of insulation layers 40 (Fig. 4). The cooling unit 60 cools the plurality of battery cells 10 via the thermal conductive sheet 50. The legs 30a (Fig. 1, Fig. 2, Fig. 4, and Fig. 5A) of the plates (the end members) 30 protrude downwards beyond the lower surfaces 40a of the insulation layers 40 of a cell film as illustrated in Fig. 3.

The cell holder 20 has a flat face part and supporting claws (which are not illustrated in the drawings) which protrude from the flat face part and are bent to support side faces of a battery cell 10. The cell holder 20 forms an opening other than the flat face part and the supporting claws. The opening exposes the entire lower surface 40a of the insulation layer 40 to the thermal conductive sheet 50.

The cell holder 20 is configured from, for example, engineering plastics such as poly butylene terephthalate (PBT) and polycarbonate (PC) and resin materials such as rubber. The cell holder 20 holds an individual battery cell 10 from its both sides in the thickness direction Dt.

A lower end of the cell holder 20 and the lower surface 40a of the insulation layer 40 which covers the bottom face 10b of the battery cell 10 have, for example, generally equal positions in the height direction Dh (Fig. 3) of the battery cell 10. The cell holder 20 has an opening which causes the entire lower surface 40a of the insulation layer 40 provided at the bottom face 10b of the battery cell 10 to be exposed to the thermal conductive sheet 50.

The plurality of cell holders 20 include, for example, a plurality of intermediate cell holders 20M and a plurality of end cell holders 20E. The intermediate cell holders 20M are interposed between two battery cells 10 adjacent to the plurality of battery cells 10 which are stacked in the thickness direction Dt. The end cell holders 20E are located at both ends of the plurality of stacked battery cells 10 in the stacking direction (thickness direction Dt) with the intermediate cell holders 20M interposed between them.

Only the end cell holder 20E has, unlike other cell holders 20, for example, a fixing unit 23 (Fig. 4) for fixing an input/output cable 101 (Fig. 1) of the assembled battery 100. The fixing unit 23 is provided to protrude towards, for example, the plate 30. The fixing unit 23 is designed so that, for example, a nut 23a or a bolt for fixing the input/output cable 101 is insert-molded.

The plates 30 are, for example, rectangular-plate-shaped members made of metal which are a pair of end plates located at both ends of the plurality of battery cells 10 in the stacking direction. A pair of plates 30 have legs 30a as illustrated in Fig. 1 and support the plurality of battery cells 10 from their both sides via the cell holders 20 in the stacking direction, that is, in the thickness direction Dt of the battery cells 10.

The legs 30a of the plates 30 (Fig. 1, Fig. 2, Fig. 4, and Fig. 5A) protrude downwards beyond the lower surfaces 40a of the insulation layers 40. The legs 30a of the plates 30 are, for example, in contact with an upper surface of the cooling unit 60 via the thermal conductive sheet 50 and are supported by the upper surface of the cooling unit 60.

The space between the lower surface 40a of the insulation layer 40 and the cooling unit 60 in the height direction Dh of the battery cell 10, that is, a protrusion height which is the distance from the lower surface 40a of the insulation layer 40 (Fig. 3) to the leg 30a of the plate 30 can be, for example, 0.1 [mm] or more and 3.0 [mm] or less.

The plate 30 has, for example, a recess (which is not illustrated in the drawings) for receiving the fixing unit 23 of the end cell holder 20E. The recess in the plate 30 receives the fixing unit 23 of the end cell holder 20E. By doing so, the fixing unit 23 can be supported and reinforced and the input/output cable 101 can be fastened to the fixing unit 23 by using the plate 30.

The area A (Fig. 2) other than the legs 32a in the area of the plate 30 on the mounting surface side corresponds to an example of a first area described in the claims and is a main area which constitutes a major part of the area on the mounting surface side. On the other hand, the area B which is an area where the legs 30a exist and includes the ends of the legs 30a facing the mounting surface is an example of a second area described in the claims. It is more preferable if the area A is located at a position equal to, or upper than, the lower surfaces 40a of the insulation layers 40. The protrusion height which is the distance from the lower surface 40a of the insulation layer 40 to the area A of the plate 30 in the height direction Dh of the battery cell 10 can be, for example, 0 [mm] or more and 15 [mm] or less.

Consequently, the plates 30 are made not to enter contact with the cooling unit 60, so that it is possible to prevent excessive cooling caused by the heat from the battery cells positioned at the ends taken away from the plates 30. As a result, it becomes possible to suppress temperature variations of the respective battery cells over the entire assembled battery 100. The legs 30a of the plates 30 may be tapered and their tips may be of a chamfered shape in order to prevent injuries when handling or touching them.

The insulation layer 40 covers the bottom face 10b of the individual battery cell 10 to not leave at least its contact face uncovered. The insulation layer 40 can be formed by, for example, a film or coating with electric insulation. Regarding materials for the insulation layer 40, for example, a rubber film or the like, other than polyethylene terephthalate (PET), can be used as resin materials having the electric insulation.

The insulation layer 40 may be provided on, for example, a part or whole of side faces of the battery cell 10 including wide side faces 10w and narrow side faces 10n (Fig. 3) as long as the insulation layer 40 is provided on at least the entire bottom face 10b of the battery cell 10; and the insulation layer 40 may be provided on all the outside surfaces excluding the external terminals 13 of the battery cell 10.

The cooling unit 60 is, for example, a rectangular-flat-plate-shaped member made of metal and includes a refrigerant flow path inside to let a refrigerant flow through it. The cooling unit 60 has, for example, tapped holes 61 to fasten bolts 80. The cooling unit 60 may be part of a housing for the assembled battery 100.

A side plate(s) 70 is, for example, a rectangular-flat-plate-shaped member made of metal. The side plates 70 are provided in a rectangular plate shape with the stacking direction of the plurality of battery cells 10 as a longitudinal direction and with the height direction Dh of the battery cell 10 as a short-side direction.

Moreover, a pair of side plates 70 are located on both sides (Fig. 3) of the plurality of battery cells 10 in the width direction Dw and are placed opposite the narrow side faces 10n of the plurality of battery cells 10 through the side parts of the cell holders 20.

An upper end of the side plate 70 is bent towards a center part of the battery cell 10 in the width direction Dw and engages with upper side-part ends of the plurality of cell holders 20. A lower end of the side plate 70 extends along the height direction Dh of the battery cell 10 and engages with lower side-part ends of the plurality of cell holders 20.

Both ends of the side plate 70 in the longitudinal direction have through holes to insert bolts 71 through them. The side plates 70 are fixed to a pair of plates 30 located at both ends of the plurality of battery cells 10 in the stacking direction by fastening the bolts 71, which are inserted through the through holes at both ends, to the tapped holes 32 in the plates 30.

Consequently, the distance between a pair of plates 30 is defined and each of the plurality of battery cells 10 is compressed within a specified range and held between the cell holders 20. Incidentally, the method for fixing the side plates 70 to the plates 30 is not limited to the bolts 71 and the side plates 70 may be fixed to the plates 30 by means of, for example, rivets, caulking, or welding.

The end member 30 has a fixing unit 300 which bulges out in a rectangular shape towards the outside of the first and second areas A and B in the stacking direction as illustrated in Fig. 1, Fig. 2, etc., and which fixes the assembled battery 100 to the mounting surface. The bolts 80 (as in, for example, Fig. 1) as fastening means are inserted through through holes 33 in the fixing unit 300 and are fastened to the tapped holes 61 in the cooling unit 60. Consequently, the thermal conductive sheet 50 enters into a state of being compressed between the lower ends 20b of the cell holders 20 and the lower surfaces 40a of the insulation layers 40 and the cooling unit 60 and being pressed against, and in contact with, the lower surfaces 40a of the insulation layers 40 and the upper surface 60a of the cooling unit 60.

The battery module 90 includes, for example, a plurality of battery cells 10, a plurality of cell holders 20, a pair of plates 30, the insulation layers 40 provided at the bottom faces 10b of the individual battery cells 10, and a pair of side plates 70.

Moreover, the battery module 90 includes a plurality of bus bars 91. The bus bars 91 are plate-shaped members made of metal having conductivity and include intermediate bus bars 91M for serially connecting the plurality of battery cells 10 and end bus bars 91E for connecting the plurality of battery cells 10, which are connected serially, to the input/output cable 101.

The plurality of battery cells 10 in the battery module 90 are stacked in the thickness direction Dt by alternately reversing the positions of the positive-electrode external terminal 13 and the negative-electrode external terminal 13.

Then, the plurality of battery cells 10 are connected serially by sequentially connecting the positive-electrode external terminal 13 of one of battery cells 10, which are adjacent to each other in the stacking direction (the thickness direction Dt), to the negative-electrode external terminal 13 of the other battery cell 10 with the intermediate bus bar 91M.

A pair of end bus bars 91E which are connected to the positive-electrode external terminal 13 of a battery cell 10 and the negative-electrode external terminal 13 of a battery cell 10 at the other end in the stacking direction are respectively connected to the input/output cable 101. The input/output cable 101 is connected to the end bus bar 91E by, for example, inserting a bolt 92, which is inserted through a terminal unit at an end of the input/output cable 101, through a through hole in the end bus bar 91E and fastening the bolt 92 to a nut 23a of the fixing unit 23 for the end cell holder 20E.

An explanation will be provided below about actions of this battery pack 100. This battery pack 100 includes, as described above, a plurality of flat battery cells 10 and a plurality of cell holders 20 which hold the individual battery cells 10 from their both sides in the thickness direction Dt and make them stacked in the thickness direction Dt.

Moreover, this battery pack 100 includes: a plurality of plates 30 which support the plurality of battery cells 10 from their both sides in the stacking direction via the cell holders 20; and the insulation layers 40 provided at all the bottom faces 10b of the battery cells 10.

Furthermore, the assembled battery 100 includes: the thermal conductive sheet 50 in contact with the lower surfaces of the insulation layers 40; and the cooling unit 60 which cools the plurality of battery cells 10 via the thermal conductive sheet 50.

Then, the legs (first legs) 30a of the plates 30 protrude downwards beyond the lower surfaces 40a of the insulation layers 40. Moreover, the cell holder 20 has supporting claws for supporting side faces of the battery cell 10 and an opening to cause the entire lower surface 40a of the insulation layer 40 to be exposed to the thermal conductive sheet 50.

Because of this configuration, for example, when the battery module 90 is placed on the support face such as the worktable in the manufacturing step of the assembled battery 100, the legs 30a of the plurality of plates 30 which support the plurality of battery cells 10 from their both sides in the stacking direction via the cell holders 20 are supported by the support face.

Moreover, the legs 30a of the plates 30 protrude downwards beyond the lower surfaces 40a of the insulation layers 40, so that a space is formed between the lower surfaces 40a of the insulation layers 40 and the support face which supports the battery module 90.

Therefore, any foreign object which exists on the support face will not be pressed against the lower surfaces 40a of the insulation layers 40 provided on the bottom faces 10b of the battery cells 10, thereby preventing any damage to the insulation layers 40. Consequently, it is possible to more reliably prevent the short circuit via the bottom faces 10b of the battery cells 10 and enhance the safety of the assembled battery 100.

Furthermore, as described above, the cell holder 20 has the supporting claws which support the side faces of the battery cell 10. Therefore, the side faces of the individual battery cell 10 can be supported by the supporting claws and the battery cell 10 can be fixed to the cell holder 20 by using the cell holders 20 to hold the individual battery cells 10 from their both sides in the thickness direction Dt and make them stacked in the thickness direction Dt.

Consequently, it becomes unnecessary to support the bottom faces 10b of the battery cells 10 with the cell holders 20 and it becomes possible to provide an opening to expose the entire lower surface 40a of the insulation layer 40 provided at the entire bottom face 10b of the battery cell 10.

Then, the legs 30a of the plates 30 are positioned at both ends and a center space 120 which belongs to the area A enters into a state where the lower surfaces 40a of the insulation layers 40 protrude downwards. Incidentally, it is structured such that a lower part of a pair of the external terminals 13 of the battery cell 10 has a current collector and there is a wound group at a center part and the wound group is positioned via the battery can 11 at an upper part of the center space 120, it is efficient to cool the center space 120 also from the viewpoint of the cooling efficiency.

Then, the cell holder 20 has the opening which causes the entire lower surface 40a of the insulation layer 40 to be exposed to the thermal conductive sheet 50 and the cooling unit 60 supports the bottom faces 10b of the cells via the thermal conductive sheet, so that it becomes possible to have the cooling unit 60 cool all the bottom faces 10b of the battery cells 10.

Consequently, as compared to a structure like a conventional assembled battery in which a cooling unit supports plates, it becomes possible to enhance the cooling performance of the battery cells 10. Furthermore, if the plates 30 are made not to be in contact with a cooling heat transfer unit, it becomes possible to prevent the end battery cells 10E from being excessively cooled by the plates and to suppress the temperature variations of the battery cells of the entire assembled battery.

Moreover, with the assembled battery 100, the distance between the lower surfaces 40a of the insulation layers 40 provided at the bottom faces 10b of the battery cells 10 and the cooling unit 60 is, for example, 0.1 [mm] or more and 3.0 [mm] or less. Consequently, by setting the distance as 0.1 [mm] or more, it is possible to prevent electric discharge between the bottom faces 10b of the battery cells 10 and the cooling unit 60 even if holes or cracks are generated in the lower surfaces 40a due to degradation over time.

More specifically, a breakdown voltage of air is appropriately 3 [MV/mm]. So, by setting the distance as 0.1 [mm] or more, for example, the electric discharge can be prevented with the assembled battery 100 with the voltage of about 300 [V]. Also, by setting the distance as 3.0 [mm] or less, it is possible to prevent the distance between the bottom faces 10b of the battery cells 10 and the cooling unit 60 from being separated more than necessary and to prevent degradation of the cooling performance of the battery cells 10.

If the assembled battery 100 explained above is employed, it is possible to prevent any damage to the insulation layer(s) 40 provided at the bottom face(s) 10b of the battery cell(s) 10 as illustrated in Fig. 3; and, what is more, the cooling performance of the battery cells 10 can be enhanced as compared to the conventional assembled batteries and the temperature difference between the respective cells can be equalized.

Incidentally, the phenomenon of the temperature difference which was the problem of the conventional assembled batteries was caused by the configuration in which the cooling unit was in contact with the plates. In that case, battery cells positioned closest to the plates entered into an excessively cooled state as compared to other battery cells.

Regarding this issue, the assembled battery 100 has been improved so that as the cooling unit 60 (Fig. 1 and Fig. 4) is separated from the plates (end members or end blocks) 30 (Fig. 1, Fig. 2, Fig. 4 to Fig. 7), the temperature difference hardly occurs between the plurality of battery cells 10 when cooled. Incidentally, the assembled battery 100 according to the present invention is not limited to the above-described configuration.

Moreover, the plates 30 and the legs 30a may be considered as temporary assembly jigs. Both of them may possibly damage the insulation layers 40, so that they are temporarily bonded together by using, for example, an adhesive tape and bolts, etc., only in the manufacturing step when it is necessary to prevent such damage; and in the next step, the legs 30d used as the temporary assembly jigs are removed from the plates 30.

After the legs 30a finish serving their role to provide a gap between the assembled battery 100A and the thermal conductive sheet 50, the assembled battery 100A can be placed on the thermal conductive sheet 50 in a form to make them closely adhered to each other.

Consequently, the cell holder 20 has the opening to cause the entire lower surface 40a of the insulation layer 40 (Fig. 3) to be exposed to the thermal conductive sheet 50 and the cooling unit 60 supports the bottom faces 10b of the cells via the thermal conductive sheet, so that it becomes possible to have the cooling unit 60 cool all the bottom faces 10b of the battery cells 10 (Fig. 3).

Fig. 5A is a bottom view of the battery module which constitutes the assembled battery 100A illustrated in Fig. 4. The assembled battery 100A is different from the assembled battery 100 illustrated in Fig. 1 because the battery module 90A includes an intermediate plate (also called a spacer) 30M at a center part of the battery cells in the stacking direction. Since other components of the assembled battery 100A are similar to those of the assembled battery 100 illustrated in Fig. 1, the same reference numerals are assigned to the similar parts and an explanation about them is omitted.

With the assembled battery 100A, the legs (second legs) 30Ma of the intermediate plates 30M also protrude downwards beyond the lower surfaces 40a of the insulation layers 40 in the same manner as the legs 30a of the plates 30. Therefore, the assembled battery 100A illustrated in Fig. 4 can also exhibit the effects similar to those of the assembled battery 100 illustrated in Fig. 1.

Fig. 6 is a perspective view illustrating the outline of the assembled battery 100B. Lower ends 70b of the side plates 70 are positioned lower than the lower surfaces 40a of the insulation layers. For example, when the battery module 90 is placed on the support face such as the worktable in the manufacturing step of the assembled battery 100B, the lower ends 70b of the side plates 70 which support the plurality of battery cells 10 from their both ends in the stacking direction via the cell holders 20 are supported by the support face.

Moreover, the lower ends 70b of the side plates 70 protrude downwards beyond the lower surfaces 40a of the insulation layers 40, so that a space is formed between the lower surfaces 40a of the insulation layers 40 and the support face which supports the battery module 90. Therefore, it is possible to prevent any damage to the insulation layers 40 without causing any foreign object existing on the support face to be pressed against the lower surfaces 40a of the insulation layers 40 provided at the bottom faces 10b of the battery cells 10.

Then, the cell holder 20 has the opening which causes the entire lower surface 40a of the insulation layer 40 provided at the bottom face 10b of the battery cell 10 to be exposed to the thermal conductive sheet 50 and the cooling unit 60 supports the bottom faces 10b of the cells through the thermal conductive sheet, so that it becomes possible to have the cooling unit 60 cool all the bottom faces 10b of the battery cells 10. Consequently, as compared to a structure like a conventional assembled battery in which a cooling unit supports plates, it becomes possible to enhance the cooling performance of the battery cells 10.

The space between the lower surface 40a of the insulation layer 40 and the cooling unit 60 in the height direction Dh of the battery cell 10, that is, a protrusion height which is the distance from the lower surface 40a of the insulation layer 40 to the lower end 70b of the side plate 70 can be, for example, 0.1 [mm] or more and 3.0 [mm] or less.

The lower end 70b of the side plate 70 may be formed as a leg structure of the first legs 30a as explained with reference to Fig. 1 and Fig. 4, so that when the battery module 90 is placed on the support face such as the worktable, a space may be formed between the lower surfaces 40a of the insulation layers 40 and the support face which supports the battery module 90.

It is more preferable if the lower ends 30c of the plates 30 are located at positions equal to, or upper than, the lower surfaces 40a of the insulation layers 40. The protrusion height which is the distance from the lower surface 40a of the insulation layer 40 to the area A of the plate 30 in the height direction Dh of the battery cell 10 can be, for example, 0 [mm] or more and 15 [mm] or less.

Accordingly, the plates 30 do not enter into contact with the cooling heat transfer unit and it is possible to prevent the end battery cells 10E from being excessively cooled by the plates and it becomes possible to suppress the temperature variations of the battery cells of the entire assembled battery.

Fig. 7 is a perspective view illustrating a method for manufacturing the assembled battery 100C. In the manufacturing step of the assembled battery 100C, for example, when the battery module 90 is placed on the support face such as the worktable, the legs ("third legs" according to the present invention) 30d of the plurality of plates 30 which support the plurality of battery cells 10 from both their sides in the stacking direction via the cell holders 20 are supported by the support face.

Furthermore, the legs 30d of the plates 30 protrude downwards beyond the lower surfaces 40a of the insulation layers 40, so that a space is formed between the lower surfaces 40a of the insulation layers 40 and the support face which supports the battery module 90. Therefore, any foreign object which exists on the support face will not be pressed against the lower surfaces 40a of the insulation layers 40 provided on the bottom faces 10b of the battery cells 10, thereby preventing any damage to the insulation layers 40. Consequently, it is possible to more reliably prevent the short circuit via the bottom faces 10b of the battery cells 10 and enhance the safety of the assembled battery 100C.

Incidentally, these embodiments explain the details only for easy understanding of the present invention. Therefore, the present invention is not limited to those including all the configurations explained in the embodiments. The present invention is not limited to the aforementioned embodiments, but includes various embodiments.

Moreover, part of the configuration of a certain embodiment can be replaced with the configuration of another embodiment and another configuration can be added to, deleted from, or replaced with part of the configuration of each embodiment. For example, an embodiment has described the case where the battery cell 10 is composed of a secondary battery; however, the present invention is not limited to this example and the battery cell 10 may be a battery other than the secondary battery.

Furthermore, the configuration of another embodiment can be added to the configuration of a certain embodiment. For example, both the lower ends (third legs) 70b which protrude from the side plates (side members) 70 as illustrated in Fig. 6 and the legs 30d of the plates (end members) 30 as illustrated in Fig. 7 may be included. In that case, they may be configured in the positional relationship so that both of them protrude beyond the lower surfaces 40a.

The assembled battery 100 according to embodiments of the present invention can be summarized as follows.
[1] The assembled battery 100 is a power source apparatus which is formed by tightly tying a plurality of stacked batteries (battery cells) 10 with holding members and is used by being placed in a mounting object (which is not illustrated in the drawings) such as an automobile.

Each of the plurality of batteries (battery cells) 10 is formed by having the power storage element (which is not illustrated in the drawings) placed in the battery can (battery container) 11 having the bottom face 10b, wherein the bottom face 10b is placed opposite the mounting object's side. Regarding a lower part of each of the plurality of batteries 10, at least the bottom face 10b is covered with the insulation member. The power storage element is configured by including a pair of a positive electrode and a negative electrode connected to terminals to/from which the electric power is input/output, and an electrolytic substance which fills a space between both these electrodes so that the power storage element can store the electric power.

An explanation will be provided by describing that the assembled battery 100 is generally a rectangular parallelopiped or a hexahedron as illustrated in Fig. 1 and its front and back faces, right and left sides, and top and bottom faces as viewed externally are basically flat faces. The assembled battery 100 has holding members for holding the plurality of batteries (battery cells) 10 in a stacked state in a front-and-back direction.

The end members (plates) 30 and the side members (side plates) 70 are included as the holding members. The end members 30 are placed at both ends of the flat batteries (battery cells) 10 in a front-and-back direction (stacking direction). The side members 70 close and surround the right and left sides of the end members 30. The end members 30 surround and integrally tightly tie the plurality of batteries (battery cells) 10.

The bottom face 10b of the battery (battery cell) 10 is covered with an insulation member, thereby forming the insulation layer 40. The insulation layer 40 should preferably be, for example, a rubber film or the like other than a film or coating with the electric insulation. The bottom face 10b is located to face the mounting object's side of the assembled battery 100.

Referring to Fig. 2 and Fig. 5A, the end member 30 has: the first area A which constitutes a main part of the square measure on the mounting object's side; and the second area B with a smaller square measure than the above. The first area A is an area of a major part of the end member 30 without the legs. The second area B is area B where the first legs 30a which protrude from the bottom face 10b towards the mounting object's side are formed, that is, an area which constitute leg joints. The assembled battery 100 illustrated in Fig. 1 and Fig. 2 has a four-leg configuration. The assembled battery 100A illustrated in Fig. 4 and Fig. 5A has a six-leg configuration.

Since the first legs 30a protrude slightly towards the mounting object's side beyond the insulation layers 40 formed by covering the bottom faces 10b with a film or the like, the bottom faces 10b can be lifted from the mounting object's side. As a result, the assembled battery 100, 100A can prevent the film tear in the manufacturing step and a gap formed by lifting it can also enhance cooling efficiency.

[2] With the assembled battery 100, 100A described in [1] above as illustrated in Fig. 2 and Fig. 5A, the end member 30 has the second areas B formed on both sides of the first area A, that is, around the bottom faces 10b. This second area B forms the first leg 30a which protrudes from the bottom face 10b towards the mounting object's side. In other words, the legs of a bifurcated structure are formed on the end member 30. Therefore, a gap through which air can pass is secured at the first legs 30a formed around the bottom faces 10b and it is also possible to stabilize the mounted state.

With the assembled battery 100A, the legs 30Ma of the intermediate plate 30M protrude downwards, just like the legs 30a of the plates 30, beyond the lower surfaces 40a of the insulation layers 40. Therefore, the assembled battery 100A illustrated in Fig. 4 can also exhibit effects similar to those of the assembled battery 100 illustrated in Fig. 1.

[3] With the assembled battery 100A described in [1] above as illustrated Fig. 4 and Fig. 5A, the spacer (intermediate plate) 30M may be placed between the plurality of stacked batteries 10. Regarding this spacer 30M, as illustrated in Fig. 5A, the assembled battery 100A may have, on the mounting object's side, a third area C and a fourth area D where the second legs 30Ma which protrude towards the mounting object's side beyond the third area C and the bottom faces 10b. The assembled battery 100A having the above-described configuration is also provided with the legs on the intermediate spacer 30M. As a result, the assembled battery 100A can be placed more stably as the number of legs has increased from four legs to, for example, six legs.

[4] With the assembled battery 100A described in [3] above as illustrated in Fig. 5A, the spacer (intermediate plate) 30M should preferably have the fourth area D located on both sides of the third area C. Regarding the assembled battery 100A having the above-described configuration, the intermediate spacer (intermediate plate) 30M is also provided with legs of the bifurcated structure. As a result, the assembled battery 100A can be placed more stably as the number of legs of the bifurcated structure has increased from four legs to, for example, six legs.

Fig. 5B illustrates a front view part 500 of the end member 30 as viewed from the stacking direction Dt and a right-side view part 510 of the end member 30 as viewed from the width direction. An edge of the end member 30 on the mounting surface side is cut off in a round shape or a tapered shape and its front-face side continues to its base part of the leg 30a as illustrated in the right-side view part 510.

Referring to Fig. 5A and Fig. 5B, in the stacking direction Dt of the batteries 10, the width 13T of a face which is the third area C of the spacer 30M is larger than the width 12T of a face which is the first area A of the end member 30 on the mounting object's side. In other words, the square measure of the face of the third area C of the spacer 30M on the mounting object's side (the square measure of the area defined by 13T) is larger than the square measure of the face of the first area A on the mounting object's side (the square measure of the area defined by 12T).

The effects, etc. of the above-described configuration are as follows. The temperature of the assembled battery with the stacked batteries can easily become high at its center side, but the temperature equalization of the battery module is achieved. Heat from the center part of the stacked batteries is effectively radiated. It is possible to suppress excessive cooling of the batteries on the end member 30 sides. It is preferable that the thermal conductive member (thermal conductive sheet) 50 should be provided opposite, or preferably in contact with, the bottom faces 10b of the batteries and the face of the spacer 30M on the mounting object's side (the area C) and the faces of the end members 30 on the mounting object's side (the areas A).

The width (13T) of the face of the third area C on the mounting object's side should preferably be equal to or more than twice as large as the aforementioned width (12T). Consequently, the heat from the center part of the stacked batteries is sufficiently radiated. Moreover, for example, for the purpose of downsizing of the battery module 90, the aforementioned width (13T) may be equal to or less than ten times as large as the aforementioned width (12T). The maximum width (13T) of the spacer 30M should preferably be smaller than the maximum width (11T) of the end member 30. Consequently, it is possible to provide a small-sized module.

The face of the first area A on the mounting object's side (the face defined by 12T) should preferably be equal to or less than 1/2 of the maximum length of the aforementioned end member 30 (the length defined by 11T) from the side where the batteries exist, in the stacking direction Dt of the batteries. The face of the first area A on the mounting object's side (the face defined by 12T) is made sufficiently shorter than the length of the end member 30 (the length defined by 11T) and then is placed on the side where the batteries 10 exist in the stacking direction Dt of the batteries. Consequently, it is possible to limit heat transfer from the lower surface side of the end members 30 and suppress excess cooling of the batteries existing at the ends of the stacked batteries (the batteries adjacent to the end members 30). This is preferable for the temperature equalization of the batteries which constitute the assembled battery.

The face of the first area A on the mounting object's side (the face defined by 12T) should preferably be larger than 1/50 of the maximum length of the aforementioned end member 30 (the length defined by 11T) from the side where the batteries exist, in the stacking direction Dt of the batteries. This is to achieve desired heat transfer from the lower surface side of the end member 30.

Furthermore, the end member 30 should preferably have a facing area 600 located opposite its adjacent battery 10. In this case, in the aforementioned second area B, part of the face opposite the battery 10 has part of the facing area 600.

The end members 30 press against the stacked batteries 10. In the second area B, the part of the face opposite the batteries also constitutes the facing area 600. In this case, a face 370 of the first area A on the mounting side is in a higher position than that of a bottom face on the mounting side 380 of the batteries 10. So, the end member 30 does not face the entire square measure of the opposite battery 10. The end member 30 faces the battery 10 with part of the second area B and the area above the second area B. There is also an area of the end member 30 which does not face the battery 10 (the area below the first area A (on the mounting surface side)). Therefore, the area of the end member 30 opposite the battery 10 can be made small and the end member 30 can be downsized.

The end of the aforementioned second area B which is closest to the mounting surface side (a linear end face of the aforementioned leg 30a) enters into contact with the mounting surface, thereby making it possible to stably fixing the assembled battery to the mounting surface. Alternatively, if the end of the second area B which is closest to the mounting surface side is located with some gap from the mounting surface, the part in contact with the mounting surface is reduced and it becomes easier to control temperature distribution. For example, if a cooling member is placed between the bottom faces of the batteries and the mounting surface, it becomes easy to control the temperature distribution in the stacking direction, which is preferable.

[5] With the assembled battery 100 described in [1] above as illustrated in Fig. 3, the battery (battery cell) 10 has: a power storage element having a positive electrode active material and a negative electrode active material; and a battery container 11 in which the power storage element is placed. In a battery width direction Dw perpendicular to the stacking direction Dt of the batteries 10, a power storage element 610 of any one of battery containers 11 may be positioned in the first area A and an area having no power storage element 610 of any one of the battery containers 11 may be positioned in the second area B as illustrated in Fig. 5B.

The first area A has no leg 30a and the third area C has no second leg 30Ma, so that a gap is secured between the battery bottom faces 10b and the mounting part surface. If the power storage element which generates heat is positioned in such first area A and third area C, the assembled battery 100 can perform cooling efficiently by letting the air pass through the gap directly under it or by making the thermal conductive sheet 50 closer to it. Contrarily, there is a high possibility that a current collecting member or the like which does not generate heat may exist, instead of the power storage element which is an object to be cooled, in the second area B and the fourth area D, the cooling efficiency can be enhanced by not performing cooling wastefully.

[6] With the assembled battery 100 described in [1] above, it is further preferable that a plurality of first legs 30a may be attachable/detachable integrally or respectively separately. The assembled battery 100 with the above-described configuration is advantageous because the degree of freedom in terms of designing and manufacturing steps expands and manufacturing options increase. The degree of freedom in terms of the manufacturing step is the degree of freedom to implement the structure regarding which it would be convenient to remove the plurality of first legs 30a which have finished serving their role to protect the insulation film after assembling without causing any damage to the insulation film which covers the battery bottoms 10b.

The plurality of first legs 30a which are attachable/detachable integrally or respectively separately under this circumstance may possibly be temporary assembly jigs. In that case, temporary assembly jigs which support assembling in a certain manufacturing step will be removed in the next step. The temporary assembly jig(s) may be temporarily fixed by using screws carved and set for temporary assembling and also an adhesive agent whose adhesive strength is adjusted for temporary fixation may be used.

[7] With the assembled battery 100 described in [1] above, the first leg 30a may be of a tapered shape whose lower part becomes narrower towards the mounting object. The assembled battery 100 is applied to the mounting object for which the above-described configuration would be convenient, so that the space can be utilized effectively.

[8] The assembled battery 100 described in [1] above may be of a tapered shape whose lower part becomes wider. The assembled battery 100 having the above-described configuration which makes it hard to fall down can easily keep stability after it is placed.

[9] With the assembled battery 100 described in any one of [1] to [8] above, a flat face including the first area A, among the entire bottom face formed by connecting the bottom faces 10b of the plurality of batteries 10, is defined as a first virtual flat surface. A space positioned between the first virtual flat surface and the mounting object is defined as a first virtual space. It is preferable that both a thermal conductive unit (thermal conductive sheet) 50 and a heat exchanging unit (cooling unit) 60 or either one of them should be placed in the first virtual space. The assembled battery 100 having the above-described configuration can effectively make use of the space positioned between the entire bottom face and the mounting object, that is, the first virtual space from the viewpoint of efficient cooling.

[10] With the assembled battery 100 described in [9] above, the cooling heat transfer unit placed in the first virtual space, that is, both the thermal conductive unit (thermal conductive sheet) 50 and the heat exchanging unit (cooling unit) 60 should preferably be configured to not enter into contact with the first legs 30a and the second legs 30Ma.

Contrarily, if the cooling heat transfer unit enters into contact with the legs 30a, 30Ma, the legs 30a, 30Ma, the end members (plates) 30, and the end cell holders 20E will be cooled in the order listed above and the end battery cells 10E which are nearest to them will be cooled excessively. As a result, the temperatures of the end battery cells 10E and other batteries 10 become no longer uniform. Therefore, in order to avoid such a problem, the assembled battery 100 is configured to not cause the thermal conductive unit or any refrigerant come close to inner surfaces of the legs 30a, 30Ma, thereby cooling the batteries uniformly and obtaining the temperature balance between the respective batteries.

[11] The assembled battery 100B illustrated in Fig. 6 is different from the assembled battery explained in [1] above because it has the third legs 70b. Specifically speaking, the assembled battery 100C illustrated in Fig. 6 has the third legs 70b instead of the first legs 30a of the assembled battery 100 relating to Fig. 1 and the second legs 30Ma of the assembled battery 100A illustrated in Fig. 4 and Fig. 5A.

The assembled battery 100C also has the end members (plates) 30 and the side members (side plates) 70 as holding members for surrounding and integrally tightly tying the plurality of batteries 10 explained in [1] above. The end members 30 are placed at both ends of the batteries (battery cells) 10 in the stacking direction. The side members 70 are connected to the holding members which can form a surrounding frame capable of closing the right and left end members 30 to form one connection.

Furthermore, with the assembled battery 100C in Fig. 7, the side member (side plate) 70 has, on the mounting object's side, the third leg 70b which protrudes towards the mounting object's side beyond the bottom faces 10b (Fig. 3). The assembled battery 100C having the above-described configuration can be used effectively by also providing the side member 70 with the third leg 70b, which is illustrated only in Fig. 6, without applying any special additional components or additional processing.

The forementioned embodiment has described that a plurality of legs 30a exist as the configuration relating to the second area B; however, there may be an aspect where there is one leg. For example, the second area B has the first areas A on its both sides. In this case, communication members 50 to communicate with the cooling member 60 and so on facing the batteries can be placed on both side ends. Alternatively, the first area A can be provided on one side and the second area B can be provided on the other side. In this case, the communication members to communicate with the cooling member and so on facing the batteries can be placed collectively on one side. On the other hand, the configuration in Fig. 1 which has the second areas B on both sides of the first area A achieves higher stability.

### REFERENCE SIGNS LIST

- 10:: battery cell (battery)
- 10b:: bottom face (of the battery cell 10)
- 10n:: narrow side face (side face) (of the battery cell 10)
- 10t:: top face (of the battery cell 10)
- 10w:: wide side face (side face) (of the battery cell 10)
- 10E:: end battery cell
- 11:: battery can
- 12:: battery lid
- 13:: (a pair of) external terminals
- 14:: gasket
- 15:: gas exhaust valve
- 16:: liquid injection hole
- 17:: liquid injection plug
- 20:: cell holder (general term)
- 20E:: end cell holder
- 20M:: intermediate cell holder
- 23:: fixing unit (attached to the end cell holder 20E)
- 23a:: nut
- 30:: plate (end member)
- 30a:: (first) leg
- 30M:: intermediate plate (spacer)
- 30Ma:: second leg
- 33:: through hole
- 40:: insulation layer
- 40a:: lower surface (of the insulation layer 40)
- 50:: thermal conductive sheet (thermal conductive unit)
- 60:: cooling unit (heat exchanging unit)
- 61:: tapped hole
- 70:: side plate (side member)
- 70b:: third leg
- 90, 90A:: battery module
- 91:: input/output terminal
- 91E:: end bus bar
- 92:: bolt
- 100, 100A to 100C:: assembled battery
- 101:: input/output cable
- 120:: center space
- Dh:: height direction (of the battery cell 10)
- Dt:: thickness direction (of the battery cell 10)
- Dw:: width direction (of the battery cell 10)

## Claims

1. An assembled battery with a plurality of stacked batteries tightly tied with holding members and mounted on a mounting object,
wherein regarding each of the plurality of batteries,
a power storage element is placed in a battery container having a bottom face;
at least the bottom face is covered with an insulation member;
the bottom face is placed opposite the mounting object's side; and
the holding members have end members placed at both ends of the batteries in a stacking direction; and
wherein each of the end members has, on the mounting object's side:
a first area; and
a second area formed to protrude towards the mounting object's side beyond the first area and the bottom face.

2. The assembled battery according to claim 1,
wherein the second area is located on both sides of the first area.

3. The assembled battery according to claim 1,
wherein the assembled battery has a spacer located between the plurality of stacked batteries; and
wherein the spacer has, on the mounting object's side, a third area and a fourth area which protrudes towards the mounting object's side beyond the third area and the bottom face.

4. The assembled battery according to claim 3,
wherein the spacer has the fourth area located on both sides of the third area.

5. The assembled battery according to claim 1,
wherein the battery has a power storage element including a positive electrode active material and a negative electrode active material, and a battery container for receiving the power storage element; and
wherein in a width direction of the batteries perpendicular to the stacking direction of the batteries, the power storage element of the battery container of any one of the batteries is positioned in the first area and an area which does not have the power storage element of the battery container of any one of the batteries is positioned in the second area.

6. The assembled battery according to claim 1,
wherein a plurality of legs, each of which forms the second area, are integrally or respectively separately attachable/detachable.

7. The assembled battery according to claim 6,
wherein the legs are of a tapered shape whose lower part becomes narrower towards the mounting object.

8. The assembled battery according to claim 6,
wherein the legs are of a tapered shape whose lower part becomes wider towards the mounting object.

9. The assembled battery according to claim 6,
wherein both a thermal conductive unit and a heat exchanging unit or either one of them are/is placed in a first virtual space positioned between a first virtual flat surface, which is bottom faces of the plurality of batteries and includes the first area, and the mounting object.

10. The assembled battery according to claim 9,
wherein both the thermal conductive unit and the heat exchanging unit, which are placed in the first virtual space, are caused not to enter contact with at least the legs.

11. The assembled battery according to claim 3,
wherein in the stacking direction of the plurality of batteries, a width of a surface of the third area of the spacer on the mounting object's side is larger than a width of a surface of the first area of the end member on the mounting object's side.

12. The assembled battery according to claim 1,
wherein the surface of the first area on the mounting object's side is provided within a range of 1/2 or less of a maximum length of the end member from a side where the plurality of batteries exist, in the stacking direction of the plurality of batteries.

13. An assembled battery with a plurality of stacked batteries tightly tied with holding members and mounted on a mounting object,
wherein regarding each of the plurality of batteries,
a power storage element is placed in a battery container having a bottom face;
at least the bottom face is covered with the insulation member;
the bottom face is placed opposite the mounting object's side; and
the holding members have:
end members placed at both ends of the batteries in a stacking direction; and
side members connected to the end members to surround, together with the end members, the plurality of batteries; and
wherein the side members have, on the mounting object's side, legs which protrude towards the mounting object's side beyond the bottom faces of the batteries.

14. An assembled battery manufacturing method for manufacturing the assembled battery stated in claim 6,
wherein the plurality of legs which are attachable/detachable are used as temporary assembly jigs;
the legs support an assembly in a certain manufacturing step; and
the legs as the jigs are removed in a step after it becomes no longer necessary to support the assembly.
